(19) Europäisches Patentamt
European Patent Office
Office européen des brevets

(11) EP 1 562 426 B1

# (12) EUROPÄISCHE PATENTSCHRIFT

(45) Veröffentlichungstag und Bekanntmachung des Hinweises auf die Patenterteilung:
**20.12.2006 Patentblatt 2006/51**

(21) Anmeldenummer: **03767549.3**

(22) Anmeldetag: **14.11.2003**

(51) Int Cl.:
***A01N 43/90*** *(2006.01)* ***A01N 37/50*** *(2006.01)*

(86) Internationale Anmeldenummer:
**PCT/EP2003/012776**

(87) Internationale Veröffentlichungsnummer:
**WO 2004/045283 (03.06.2004 Gazette 2004/23)**

## (54) FUNGIZIDE MISCHUNGEN ZUR BEKÄMPFUNG VON REISPATHOGENEN

FUNGICIDAL MIXTURES FOR CONTROLLING RICE PATHOGENS

MELANGES FONGICIDES SERVANT A LUTTER CONTRE DES AGENTS PATHOGENES DU RIZ

(84) Benannte Vertragsstaaten:
**AT BE BG CH CY CZ DE DK EE ES FI FR GB GR HU IE IT LI LU MC NL PT RO SE SI SK TR**
Benannte Erstreckungsstaaten:
**LT LV**

(30) Priorität: **15.11.2002 DE 10253587**

(43) Veröffentlichungstag der Anmeldung:
**17.08.2005 Patentblatt 2005/33**

(73) Patentinhaber: **BASF Aktiengesellschaft
67056 Ludwigshafen (DE)**

(72) Erfinder:
- **TORMO I BLASCO, Jordi
69514 Laudenbach (DE)**
- **GROTE, Thomas
67157 Wachenheim (DE)**
- **AMMERMANN, Eberhard
64646 Heppenheim (DE)**
- **STIERL, Reinhard
67251 Freinsheim (DE)**
- **STRATHMANN, Siegfried
67117 Limburgerhof (DE)**
- **SCHÖFL, Ulrich
68782 Brühl (DE)**

(56) Entgegenhaltungen:
**EP-A- 0 988 790**
**WO-A-98/46607**
**WO-A-99/48367**
**US-A- 5 593 996**
**US-B1- 6 268 371**

EP 1 562 426 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die vorliegende Erfindung betrifft fungizide Mischungen zur Bekämpfung von Reispathogenen, enthaltend als aktive Komponenten

1) die Verbindung der Formel I,

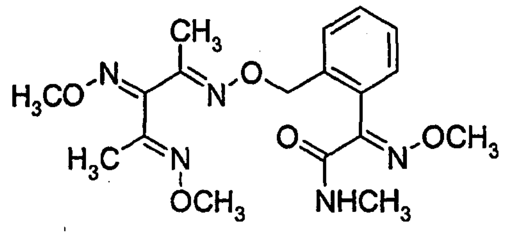

I

und

2) die Verbindung der Formel II,

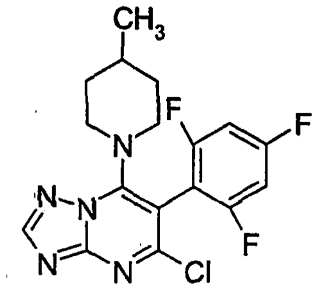

II

in einer synergistisch wirksamen Menge.

Außerdem betrifft die Erfindung ein Verfahren zur Bekämpfung von Reispathogenen mit Mischungen der Verbindung I mit der Verbindung II und die Verwendung der Verbindung I mit der Verbindung II zur Herstellung derartiger Mischungen sowie Mittel, die diese Mischungen enthalten.

Die Verbindung der Formel I, 2-[2-(2,3-Bis-methoxyimino-1-methyl-butylidenaminooxymethyl)-phenyl]-2-methoxyimino-N-methyl-acetamid, gehört der Klasse der Strobilurin-Wirkstoffe an, ihre Herstellung und deren Wirkung gegen Schadpilze, insbesondere gegen Reiskrankheiten, ist bekannt (WO 97/15552; common name: Orysastrobin).

Die Verbindung II, 5-Chlor-7-(4-methyl-piperidin-1-yl)-6-(2,4,6-trifluor-phenyl)-[1,2,4]triazolo[1,5-a]pyrimidin, ihre Herstellung und deren Wirkung gegen Schadpilze ist ebenfalls aus der Literatur bekannt (WO 98/46607).

Mischungen von Orysastrobin mit anderen Wirkstoffen sind bekannt (WO 99/48366, WO 99/48367).

Mischungen von Triazolopyrimidinen mit verschiedenen Wirkstoffen sind aus EP-A 988 790 allgemein bekannt. Mischungen mit synthetischen Strobilurinderivaten sind von der allgemeinen Offenbarung umfasst.

Die aus EP-A 988 790 bekannten synergistischen Mischungen von Triazolopyrimidinderivaten werden als fungizid wirksam gegen verschiedene Krankheiten von Getreide, Obst und Gemüse, insbesondere Mehltau an Weizen und Gerste oder Grauschimmel an Äpfeln beschrieben.

US 5 593 996 zeigt die Wirksamkeit von Triazolopyrimidinderivaten, wie sie in EP-A 988 790 verwendet werden, gegen *Pyricularia oryzae.*

US 6 268 371 beschreibt synergistische Mischungen von aus US 5 593 996 bekannten Triazolopyrmidinen mit dem Amid-Fungizid Fenoxanil insbesondere zur Bekämpfung von reispathogenen *Pyricularia-* und *Rhizoctonia-Arten.*

Aufgrund der speziellen Kultivierungsbedingungen von Reispflanzen bestehen deutlich andere Anforderungen an ein Reisfungizid als an Fungizide, die im Getreide- oder Obstbau angewandt werden. Gravierende Unterschiede bestehen in der Anwendungsmethode: In Reiskulturen wird das Fungizid üblicherweise direkt bei, oder kurz nach der Aussaat auf den Boden ausgebracht. Das Fungizid wird über die Wurzeln in die Pflanze aufgenommen und im Pflanzensaft in der Pflanze zu den zu schützenden Pflanzenteilen transportiert. Eine hohe Systemik ist daher für Reisfungizide essentiell. Im Getreide- oder Obstbau hingegen wird das Fungizid üblicherweise auf die Blätter oder die Früchte appliziert,

daher spielt in diesen Kulturen die Systemik der Wirkstoffe eine erheblich geringere Rolle.

Auch sind in Reis andere Pathogene typisch als in Getreide oder Obst. *Pyricularia oryzae* und *Corticium sasakii* (syn. *Rhizoctonia solani* AG 1-IA) sind die Erreger der am meisten verbreiteten Krankheiten von Reispflanzen. Sie treten in anderen Kulturpflanzen nicht im nennenswerten Umfang auf. *Rhizoctonia solani* ist das einzige landwirtschaftlich bedeutende Pathogen innerhalb der Unterklasse *Agaricomycetidae.* Im Gegensatz zu den meisten anderen Pilzen befällt dieser Pilz die Pflanze nicht über Sporen, sondern über eine Myzelinfektion.

Aus diesen Gründen sind Erkenntnisse zur fungiziden Aktivität von Wirkstoffen im Getreide- oder Obstbau nicht auf Reiskulturen übertragbar.

Orysastrobin ist als spezielles Reisfungizid bekannt. Im Hinblick auf eine wirkungsvollere Bekämpfung von Reispathogenen bei möglichst geringen Aufwandmengen lagen der vorliegenden Erfindungen Mischungen von Orysastrobin als Aufgabe zugrunde, die bei verringerter Gesamtmenge an ausgebrachten Wirkstoffen eine verbesserte Wirkung gegen die Schadpilze zeigen.

Demgemäss wurde die eingangs definierte Wirkstoffkombination gefunden. Es wurde außerdem gefunden, dass sich bei gleichzeitiger gemeinsamer oder getrennter Anwendung der Verbindungen I und der Verbindung II oder bei Anwendung der Verbindungen I und der Verbindung II nacheinander Schadpilze besser bekämpfen lassen als mit den Einzelverbindungen.

Bevorzugt setzt man bei der Bereitstellung der Mischungen die reinen Wirkstoffe I und II ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Die Mischungen der Verbindungen I und II bzw. die gleichzeitige gemeinsame oder getrennte Verwendung der Verbindungen I und der Verbindung II zeichnen sich aus durch eine hervorragende Wirksamkeit gegen Schadpilze aus der Klasse der *Ascomyceten*, *Deuteromyceten* und *Basidiomyceten.* Sie weisen hohe Systemik auf und können daher zur Saatgutbehandlung, wie auch als Blatt- und Bodenfungizide eingesetzt werden.

Besondere Bedeutung haben sie für die Bekämpfung von Schadpilzen an Reispflanzen und an deren Saatgut, wie *Bipolaris*- und *Drechslera*-Arten. Sie lassen sich besonders vorteilhaft zur Bekämpfung von *Pyricularia oryzae,* dem Verursacher des Reisbrands, und der Blattscheidenkrankheit an Reis, verursacht durch *Corticium sasakii* (syn. *Rhizoctonia solani*), einsetzen.

Die Verbindungen I und die Verbindung II können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindungen I und die Verbindung II werden üblicherweise in einem Gewichtsverhältnis von 100:1 bis 1: 100, vorzugsweise 20:1 bis 1:50, insbesondere 5:1 bis 1:20 angewandt.

Die Aufwandmengen der erfindungsgemäßen Mischungen liegen je nach Art der Verbindung und des gewünschten Effekts bei 5 g/ha bis 2000 g/ha, vorzugsweise 50 bis 1500 g/ha, insbesondere 50 bis 750 g/ha.

Die Aufwandmengen für die Verbindung I liegen entsprechend in der Regel bei 1 bis 1000 g/ha, vorzugsweise 10 bis 750 g/ha, insbesondere 20 bis 500 g/ha.

Die Aufwandmengen für die Verbindung II liegen entsprechend in der Regel bei 1 bis 1000 g/ha, vorzugsweise 10 bis 750 g/ha, insbesondere 20 bis 500 g/ha.

Bei der Saatgutbehandlung werden im allgemeinen Aufwandmengen an Mischung von 0,001 bis 1 g/kg Saatgut, vorzugsweise 0,01 bis 0,5 g/kg, insbesondere 0,01 bis 0,1 g/kg verwendet.

Bei der Bekämpfung für Pflanzen pathogener Schadpilze erfolgt die getrennte oder gemeinsame Applikation der Verbindungen I und II oder der Mischungen aus den Verbindungen I und II durch Besprühen oder Bestäuben der Samen, der Sämlinge, der Pflanzen oder der Böden vor oder nach der Aussaat der Pflanzen oder vor oder nach dem Auflaufen der Pflanzen. Bei der Anwendung gegen Reispathogene erfolgt die Applikation der Verbindungen gemeinsam oder getrennt bevorzugt durch Granulatapplikation oder Bestäuben der Böden.

Die erfindungsgemäßen Mischungen, bzw. die Verbindungen I und II können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, femer Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethylsulfoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG)

50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel können zu den erfindungsgemäßen Mitteln im Gewichtsverhältnis 1:10 bis 10:1 zugemischt werden.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Verbindung und der Mischungen lässt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit

Wasser verdünnt.

Anwendungsbeispiel - Protektive Wirksamkeit gegen Reisbrand verursacht durch *Pyricularia oryzae*

Blätter von in Töpfen gewachsenen Reiskeimlingen der Sorte "Tai-Nong 67" wurden mit wässriger Suspension in der unten angegebenen Wirkstoffkonzentration bis zur Tropfnässe besprüht. Am folgenden Tag wurden die Pflanzen mit einer wässrigen Sporensuspension von *Pyricularia oryzae* inokuliert. Anschließend wurden die Versuchspflanzen in Klimakammern bei 22 - 24°C und 95 - 99 % relativer Luftfeuchtigkeit für 6 Tage aufgestellt. Dann wurde das Ausmaß der Befallsentwicklung auf den Blättern visuell ermittelt.

Die Auswertung erfolgt durch Feststellung der befallenen Blattflächen in Prozent. Diese Prozent-Werte wurden in Wirkungsgrade umgerechnet.

Der Wirkungsgrad (W) wird nach der Formel von Abbot wie folgt berechnet:

$$W = (1 - \alpha/\beta) \cdot 100$$

$\alpha$ entspricht dem Pilzbefall der behandelten Pflanzen in % und

$\beta$ entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade der Wirkstoffmischungen werden nach der Colby Formel [R.S. Colby, Weeds 15, 20-22 (1967)] ermittelt und mit den beobachteten Wirkungsgraden verglichen.
Colby Formel:

$$E = x + y - x \cdot y/100$$

E zu erwartender Wirkungsgrad, ausgedrückt in % der unbehandelten Kontrolle, beim Einsatz der Mischung aus den Wirkstoffen A und B in den Konzentrationen a und b

x der Wirkungsgrad, ausgedrückt in % der unbehandelten Kontrolle, beim Einsatz des Wirkstoffs A in der Konzentration a

y der Wirkungsgrad, ausgedrückt in % der unbehandelten Kontrolle, beim Einsatz des Wirkstoffs B in der Konzentration b

Als Vergleichsverbindungen wurden die in EP-A 988 790 für Mischungen mit synthetischen Strobilurinderivaten vorgeschlagenen Verbindungen A und B verwendet:

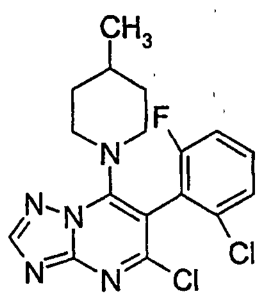

A

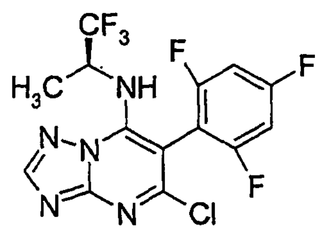

B

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | Kontrolle (unbehandelt) | - | (83% Befall) |
| 2 | I (Orysastrobin) | 4<br>0,25 | 28<br>0 |
| 3 | II | 4<br>1 | 52<br>3 |
| 4 | Vergleich A | 4<br>1 | 28<br>0 |
| 5 | Vergleich B | 4<br>1 | 52<br>28 |

Tabelle B - erfindungsgemäße Mischungen

| Beispiel | Wirkstoffmischung Konzentration Mischungsverhältnis | beobachteter Wirkungsgrad | berechneter Wirkungsgrad*) |
|---|---|---|---|
| 6 | I + II<br>0,25 + 4 ppm<br>1:16 | 82 | 52 |
| 7 | I + II<br>1 + 0,25 ppm<br>4:1 | 76 | 30 |
| *) berechneter Wirkungsgrad nach der Colby-Formel | | | |

Tabelle C - Vergleichsversuche - Mischungen mit den in EP-A 988 790 für Mischungen mit Strobilurinderivaten vorgeschlagenen Verbindungen A und B

| Beispiel | Wirkstoffmischung Konzentration Mischungsverhältnis | beobachteter Wirkungsgrad | berechneter Wirkungsgrad*) |
|---|---|---|---|
| 8 | I + A<br>0,25 + 4 ppm<br>1 : 16 | 0 | 28 |
| 9 | I + A<br>1 + 0,25 ppm<br>4:1 | 0 | 28 |
| 10 | I + B<br>0,25 + 4 ppm<br>1 : 16 | 40 | 52 |
| 11 | I + B<br>1 + 0,25 ppm<br>4:1 | 28 | 48 |
| *) berechneter Wirkungsgrad nach der Colby-Formel | | | |

Aus den Ergebnissen der Versuche geht hervor, dass die erfindungsgemäßen Mischungen von Orysastrobin

mit dem Triazolopyrimidinderivat II eine deutlich erhöhte Wirksamkeit zeigen, während bei vergleichbaren Aufwandmengen die Mischungen mit den in EP-A 988 790 vorgeschlagenen Verbindungen A und B höchstens nur schwach aktiv sind.

**Patentansprüche**

1. Fungizide Mischungen, enthaltend als aktive Komponenten

1) die Verbindung der Formel I,

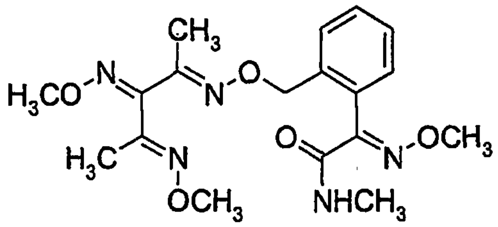

I

und
2) die Verbindung der Formel II,

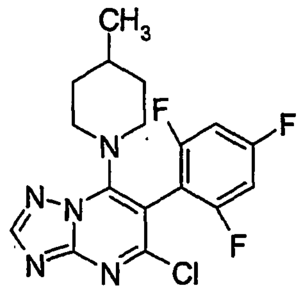

II

in einer synergistisch wirksamen Menge.

2. Fungizide Mischungen gemäß Anspruch 1, enthaltend die Verbindung der Formel I und die Verbindung der Formel II in einem Gewichtsverhältnis von 100:1 bis 1:100.

3. Fungizides Mittel, enthaltend einen flüssigen oder festen Trägerstoff und eine Mischung gemäß Anspruch 1 oder 2.

4. Verfahren zur Bekämpfung von reispathogenen Schadpilzen, **dadurch gekennzeichnet, dass** man die Pilze, deren Lebensraum oder die vor Pilzbefall zu schützenden Pflanzen, den Boden oder Saatgüter mit einer wirksamen Menge der Verbindung I und der Verbindung II gemäß Anspruch 1 in synergistisch wirksamen Mengen behandelt.

5. Verfahren nach Anspruch 4, **dadurch gekennzeichnet, dass** man die Verbindungen I und II gemäß Anspruch 1 gleichzeitig, und zwar gemeinsam oder getrennt, oder nacheinander ausbringt.

6. Verfahren nach Anspruch 4, **dadurch gekennzeichnet, dass** man die Mischung gemäß Ansprüchen 1 oder 2 in einer Menge von 5 g/ha bis 2000 g/ha aufwendet.

7. Verfahren nach Ansprüchen 4 und 5, **dadurch gekennzeichnet, dass** man die Mischung gemäß Ansprüchen 1 oder 2 in einer Menge von 0,001 bis 1 g/kg Saatgut anwendet.

8. Verfahren nach Ansprüchen 4 bis 7, **dadurch gekennzeichnet, dass** der Schadpilz *Pyricularia oryzae* bekämpft wird.

**9.** Saatgut, enthaltend die Mischung gemäß Ansprüchen 1 oder 2 in einer Menge von 0,001 bis 1 g/kg.

**10.** Verwendung der Verbindung I und der Verbindung II gemäß Anspruch 1 zur Herstellung eines zur Bekämpfung von reispathogenen Schadpilzen geeigneten Mittels.

## Claims

**1.** A fungicidal mixture, comprising, as active components,

1) the compound of the formula I,

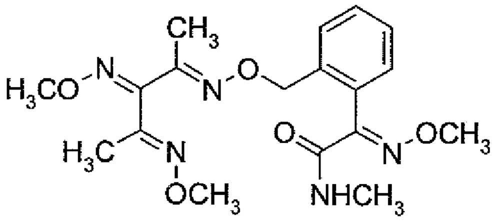

I

and
2) the compound of the formula II,

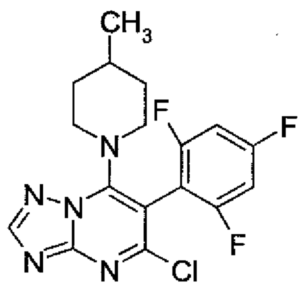

II

in a synergistically effective amount.

**2.** The fungicidal mixture according to claim 1, comprising the compound of the formula I and the compound of the formula II in a weight ratio of from 100:1 to 1:100.

**3.** A fungicidal mixture, comprising a liquid or solid carrier and a mixture according to claim 1 or 2.

**4.** A method for controlling harmful fungi which are rice pathogens, which comprises treating the fungi, their habitat or the plants, the soil or the seeds to be protected against fungal attack with an effective amount of the compound I and the compound II according to claim 1 in synergistically effective amounts.

**5.** The method according to claim 4, wherein the compounds I and II according to claim 1 are applied simultaneously, that is jointly or separately, or in succession.

**6.** The method according to claim 4, wherein the mixture according to claim 1 or 2 is applied in an amount of from 5 g/ha to 2000 g/ha.

**7.** The method according to claim 4 or 5, wherein the mixture claimed in claim 1 or 2 is applied in an amount of from 0.001 to 1 g/kg of seed.

**8.** The method according to any of claims 4 to 7, wherein the harmful fungus *Pyricularia oryzae* is controlled.

9. Seed, comprising the mixture according to claim 1 or 2 in an amount of from 0.001 to 1 g/kg.

10. The use of the compound I and the compound II according to claim 1 for preparing a composition suitable for controlling harmful fungi which are rice pathogens.

**Revendications**

1. Mélanges fongicides, contenant comme composants actifs :

1) le composé de formule I :

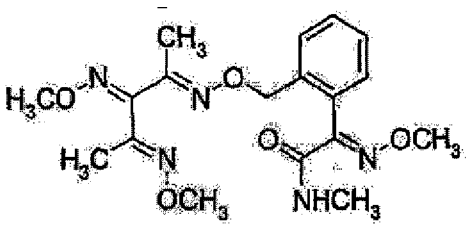

I

et
2) le composé de formule II :

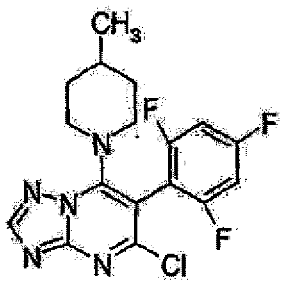

II

en quantité efficace au plan synergique.

2. Mélanges fongicides selon la revendication 1, contenant le composé de formule I et le composé de formule II dans un rapport pondéral de 100:1 à 1:100.

3. Agent fongicide, contenant un véhicule liquide ou solide et un mélange selon la revendication 1 ou 2.

4. Procédé pour lutter contre les champignons nuisibles pathogènes du riz, **caractérisé en ce que** l'on traite les champignons, leur biotope ou les plantes à protéger de l'infection des champignons, le sol ou les semences avec une quantité efficace du composé I et du composé II selon la revendication 1 en quantités efficaces au plan synergique.

5. Procédé selon la revendication 4, **caractérisé en ce que** l'on répand les composés I et II selon la revendication 1 simultanément, c'est-à-dire conjointement ou séparément, ou successivement.

6. Procédé selon la revendication 4, **caractérisé en ce que** l'on utilise le mélange selon la revendication 1 ou 2 en quantité de 5 g/ha à 2000 g/ha.

7. Procédé selon les revendications 4 et 5, **caractérisé en ce que** l'on utilise le mélange selon la revendication 1 ou 2 en quantité de 0,001 à 1 g/kg de semences.

8. Procédé selon les revendications 4 à 7, **caractérisé en ce qu'**on lutte contre le champignon nuisible *Pyricularia*

*oryzae*.

**9.** Semences contenant le mélange selon la revendication 1 ou 2 en quantité de 0,001 à 1 g/kg.

**10.** Utilisation du composé I et du composé II selon la revendication 1 pour fabriquer un agent convenant à la lutte contre des champignons nuisibles pathogènes du riz.